# EUROPEAN PATENT SPECIFICATION

(11) **EP 2 567 767 B1**
(45) Date of publication and mention of the grant of the patent: **20.01.2016**
(21) Application number: 12183247.1
(22) Date of filing: 06.09.2012
(51) Int. Cl.: B23B 31/16

(54) **Tool spindle**
Werkzeugspindel
Broche porte-outil

(30) Priority: 07.09.2011 IT BS20110121
(43) Date of publication of application: 13.03.2013
(73) Proprietor: UTENSILPAVA AFFILATURA di Pavanelli Raffaele, 25064 Gussago (IT)
(72) Inventor: Pavanelli, Raffaele, 25064 GUSSAGO (IT)
(74) Representative: Pes, Matteo

(56) References cited:
- EP-A1- 2 283 955
- EP-A1- 2 295 176
- EP-A2- 0 106 240
- GB-A- 105 887

## Description

### Field of the Invention

The present invention relates in general to tool spindles and specifically relates to a self-centering tool spindle provided with means for adjusting the position of maximum opening of the respective clamping jaws.

### State of the Art

In the field of automatic machines for producing and/or sharpening tools it is known to use self-centering spindles or self-centering clamps for supporting the tool shank during the related machining. With the term *tool,* a drill bit, a cutter, etc. are intended for example. An example of automatic machine for tools sharpening is an electrically controlled sharpener.

A typical spindle used in this field comprises a plurality of jaws or clamps synchronously radially movable with the longitudinal axis of the spindle itself; the shank of a tool is intended for being clamped between the jaws such to coaxially extend with the longitudinal axis of the spindle. In this meaning the spindle is self-centering. When the tool shank is locked by the jaws each relative movement between the shank and the spindle is prevented; the rotations given by the spindle to the respective longitudinal axis are directly transmitted to the tool shank, which is rotated on the same longitudinal axis as a consequence.

In the self-centering clamps the shank is locked between clamping elements which, by virtue of an elastic deformation given by an actuator, move radially with respect to the longitudinal axis of rotation of the clamp body. The clamps are configured to clamp shanks of a single diameter.

The correct clamping of a tool shank in a spindle is substantially obtained by actuating two steps:
- in a first step the spindle jaws are opened, that is they are spaced apart in radial direction with respect to the longitudinal axis of the spindle, to allow an easy insertion of the shank;
- in a second step the shank is inserted between the opened jaws with its own longitudinal axis aligned as much as possible with the longitudinal axis of the spindle, then the jaws are pushed at the same time to abut against the outer surface of the shank with high strength, enough to obtain the locking of the shank with respect to the spindle.

The correct clamping of a tool shank in a clamp is substantially obtained by actuating two steps:
- in a first step the clamping elements of the clamp are opened, that is the (minimum) spring back in radial direction with respect to the longitudinal axis of the clamp is allowed, to allow the insertion of the shank;
- in a second step the shank is inserted between the clamping elements with its own longitudinal axis aligned as much as possible with the longitudinal axis of the clamp, then the clamping elements are elastically deformed and at the same time pushed to abut against the outer surface of the shank with high strength, enough to obtain the locking of the shank with respect to the clamp.

At the end of the machining, when the spindle is stopped, the jaws or the clamping elements are opened again to release the machined tool and allow the insertion and the clamping of the shank of another tool.

In a manually actuated machine, for example an electrical tool as a portable drill, the two disclosed steps are actuated by the user and do not present particular criticalities from the technical point of view. Therefore the present invention does not relate to the spindles for manual electrical tools.

In automatic machines the radial movement of the jaws is driven by adapted operating devices of the spindle, for example a kinematic system, in their turn automatically operated by the machine which the spindle is associated to, for example by means of a pneumatic actuator, without any manual intervention. Similarly, in the clamps the deformation of the clamping elements is driven by the machine the clamp is associated to.

In general, in an automatic machine intended for autonomously working without any operator interventions, the insertion of shanks of the tools in the spindle or clamp can cause significant drawbacks.

With reference to a typical application, for example, the automatic machines for producing and/or sharpening tools are usually associated to a robotized manipulator which takes a tool at a time from a collector and provides to insert the shank thereof into the clamp, between the opened clamping elements. Once the clamping elements of the clamp are clamped on the shank, the manipulator withdraws to free the space needed to complete the machining of the tool. At the end of the machining the clamp is stopped, its clamping elements are opened, and the manipulator takes the machined tool to put it into the collector. The insertion of the tool shank into the clamp should occur while taking care of keeping the longitudinal axis of the shank overlapping as much as possible with the longitudinal axis of the clamp. Possible misalignments can easily cause an incorrect closure of the clamping elements on the shank and the following machine downtime. In other words the tool shank should not be inserted crooked between the clamping elements of the clamp. Similarly, the shank should not be inserted crooked between the jaws of a spindle.

The insertion of the tool shank in the spindle or clamp of an automatic machine is critical even when manually carried out. It is just in this instance that alignment mistakes are more often found.

The above described misalignments are as much probable as larger is the distance of the clamping elements from the axis of the clamp or the distance of the jaws from the longitudinal axis of the spindle, in the position of maximum opening, which corresponds to the arrangement experienced during the insertion of the tool shank by the manipulator. In other words the misalignments are as much more probable in the insertion step of the shank as greater is the clearance between the shank and the spindle jaws, or else between the shank and the clamping elements of the clamp.

To minimize the risks, the spindle associated to an automatic producing and/or sharpening machine is selected - from a plurality of available interchangeable spindles - such that in the relative position of maximum opening the jaws define diameters substantially equivalent to the diameter of the shanks of the tools to be machined, except from minimum clearances. In practice the automatic machine is prearranged by the operator with a spindle adapted to accommodate shanks whose external diameter is comprised in a range suitable with the opening of the spindle jaws. Therefore the tools prepared in the collector have to be preselected such that the respective shanks have an external equivalent or comparable diameter, anyway not too much different from the maximum diameter which can be accommodated between the spindle jaws.

Similarly, the clamp associated to an automatic producing and/or sharpening machine is selected - from a plurality of available interchangeable clamps - such that, in the relative position of maximum opening of the clamping elements, jaws define just the diameter of the shanks of the tools to be machined.

A further drawback is therefore the need of programming in advance the production cycles; the machining of tools having shanks of the same diameter or having comparable diameters (at least when a spindle is used) will correspond to each cycle.

For example, an automatic machine is programmed to make overnight machining cycles; on Monday of tools provided with shank whose outer diameter is comprised in the range 2÷6 mm, on Tuesday of tools provided with shank whose outer diameter is comprised in the range 7÷10 mm, on Wednesday of tools provided with shank whose outer diameter is comprised in the range 10÷15 mm, etc. At every cycle an operator prearranges a spindle suitable with the diameters of the shanks of the tools to be machined in that production cycle on the machine. Similarly, if a clamp is used, this is suitable with a single diameter at a time.

At the moment it is therefore necessary to have more than one spindle to machine tools with shanks whose diameter varies in a wide range.

Further the replacement of a spindle is a fine operation which takes time and causes the machine downtime.

Instead there is from long time the need of having spindles more versatile than the today available spindles, that is spindles adapted to accommodate shanks with different diameter over the traditional compatibility limits.

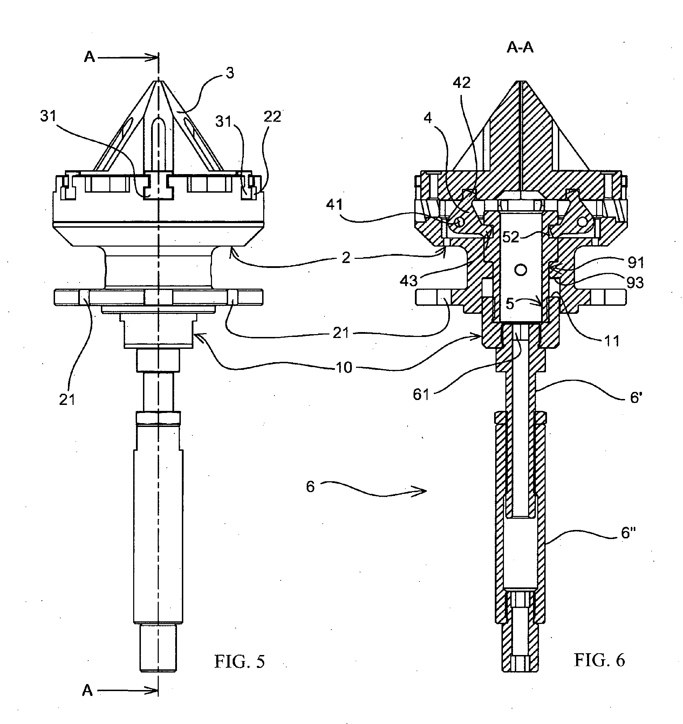

Also GB 105887 which discloses the features of the preamble of the independent claim describes a solution which provides the manual adjustment of the closing stop means of the jaws. With particular reference to the figure 6, the tool spindle comprises pins **d** able to be clamped on a tool shank. The movement of the pins **d** is driven by a kinematic series of elements comprising a rod actuator, consisting of the elements identified with **n, E** (capital letter) characters, and the cams a, b. While the opening and closing movement of the pins **d** can be automatically driven through the afore said kinematic chain, the adjustment of the closing stop means of the pins **d** is merely manual, since it is feasible only by manually acting with a wrench on the screws identified with **e** - character (lower-case). The pins **d** are usually kept open (spaced apart from the axis) by the respective springs **g.** The position of the screws **e** limits the travel of the respective cam a in radial direction and, therefore, limits the maximum closure of the pins **d** with respect to the spindle axis.

The screws **e** have to be adjusted one at a time by the operator. By virtue of this, also the spindle described in GB 105887 does not allow to automatically accommodate, that is without the operator intervention, shanks with diameter different over the compatibility limits provided by the current adjustment of the screws e. Further the screws have to be adjusted symmetrically.

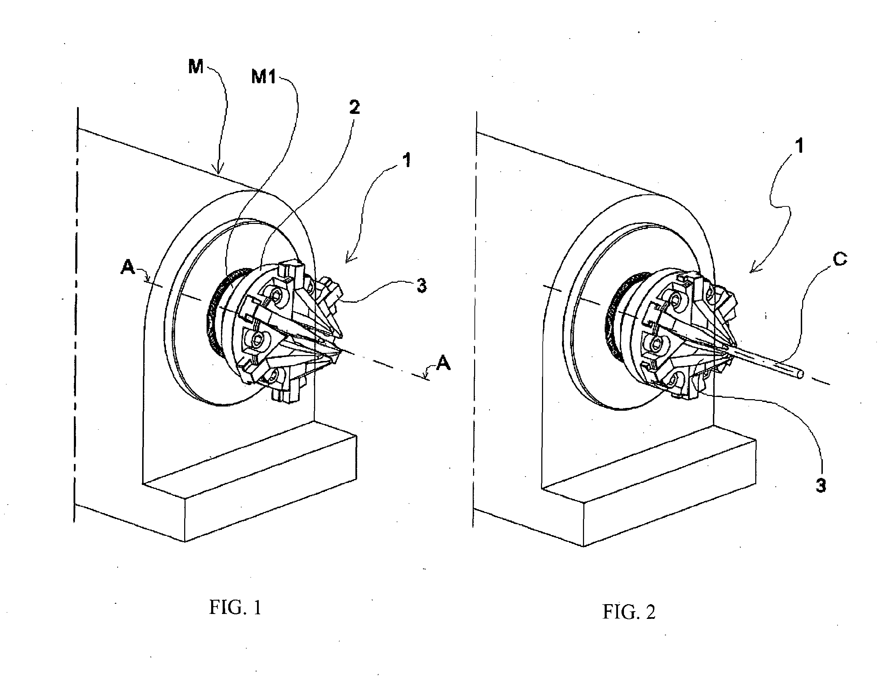

The patent application EP 0106240 describes a solution wherein the starting position of the jaws can be modified, but the stop means can not be changed. Referring to figure 1, with reference numerals 13 and 14 the elements, which along with the rod actuator 15 drive the movement of the respective jaw 11, are denoted. The driving elements 13, 14 are not elements adjusting the travel of the jaw 11. Only the screw 12, which can be manually actuated, allows to modify the starting radial position of the jaw 11, that is the opening stop position, but not the closing stop position. To obtain a different closing stop means the jaws 11 would have to be replaced with jaws having different length.

### Object and Summary of the Invention

It is therefore an object of the present invention to provide a tool spindle for automatic machines able to simply and effectively solve the drawbacks of the traditional solutions, by allowing the automatic catch, that is without the operator intervention, of a great variety of tools with different diameter.

The present invention relates therefore to a spindle according to claim 1. In some scopes the spindle can also be defined with the term chuck.

In particular, the spindle comprises:
- a body provided with a longitudinal axis of rotation;
- a plurality of jaws (or clamps), constrained to the body, movable between a position of maximum closure, proximal to the longitudinal axis of rotation, and a position of maximum opening, distal from the longitudinal axis of rotation;
- means for driving the displacement of said jaws between the position of maximum closure and position of maximum opening, and/ or vice versa,
wherein the travel extent of said driving means can be adjusted by means of suitable means to synchronously modify the position of maximum opening of the jaws, regardless from the position of the closing stop means, which can be unchanged, or not.

The adjusting means are designed to modify the stop means of every jaws at the same time and symmetrically. Advantageously the maximum opening of the spindle jaws according to the present invention is adjustable from the outside the body, for example by means of a wrench, and preferably when the spindle is assembled on the corresponding automatic machine. Therefore the technician in charge of the machine fine tuning does not have to change the spindle according to the diameter of the shanks of the tools to be machined in a given machining cycle; more probably the technician can adjust the maximum opening of the jaws, of all the jaws synchronously by acting on the adjusting means, to support the insertion without extreme clearances and without misalignments of the shanks provided for the following machining cycle.

With the term *synchronous* it is meant that the stop means of the jaws move in the new position synchronously, and not one at a time as provided in traditional solutions.

Therefore the spindle according to the present invention allows to increase the productivity with respect to known solutions. For example the spindle allows to automatically machine, that is without the operator intervention, tools having diameter ruled according to the decimal metric system (International System) and tools having diameter ruled according to the English metric system.

The spindle body is intended to be firmly attached to an automatic machine for machining and/or sharpening tools. The machine is provided with an engine which rotates the spindle body around the respective longitudinal axis of rotation. The spindle body is on the contrary prevented from displacements in direction of the respective longitudinal axis of rotation.

For example, the completely closed jaws abut one against another and in the position of maximum opening each jaw is 15 mm spaced apart from the longitudinal axis of rotation of the spindle body. In this arrangement the maximum diameter of the shanks able to be inserted between the jaws is of 30 mm. The insertion of shanks having an outer diameter comprised between 8 mm and 10 mm could easily cause misalignments. Therefore before starting a machining cycle with such shanks, the technician adjusts the position of maximum opening of the jaws, for example by reducing the distance of each jaw from the longitudinal axis of rotation of the spindle body to 6 mm.

Preferably at least one portion of the adjusting means is accessible from the outside the body; this feature allows to adjust the travel extent of the driving means by means of a wrench engageable in the accessible portion of the adjusting means. In other terms the synchronized adjustment of the maximum opening of the jaws can be obtained by engaging the wrench with the adjusting means being substantially inside the spindle body, but accessible from the outside even when the spindle is assembled on the machine. By acting on the key the stop means of every jaw are adjusted contemporaneously and symmetrically.

According to the invention the spindle body is provided with a through hole coaxial with the longitudinal axis of rotation. The driving means comprise in their turn:
- a shaft coupling with an outer actuator, generally a pneumatic actuator of an automatic machine which shifts the coupling shaft alternately in the two directions along the longitudinal axis, for example a pusher;
- an operating shaft, alternately shiftable in the through hole in response to biases given by the coupling shaft, and
- a plurality of elements for transmitting the movement of the operating shaft to the jaws.

Preferably the maximum travel extent of the operating shaft inside the through hole is limited by stop means; however, by acting on the adjusting means the travel extent of the operating shaft can be reduced with respect to the maximum extent allowed by the stop means.

Preferably the through hole is provided with a narrowing section; in this instance the stop means are two shoulders associated to the operating shaft and placed at sides opposite to such a narrowing section. The shoulders are intended to alternately move into abutment against the narrowing section.

According to the invention the operating shaft and the coupling shaft are shiftingly and integrally coupled, that is they shift jointly along the longitudinal axis. The adjusting means can be activated to adjust the travel extent transmitted by the coupling shaft to the operating shaft in longitudinal direction. Preferably the adjusting is obtained by modifying the extension of the coupling shaft between a minimum and a maximum to minimize and maximize, respectively, the travel extent of the operating shaft in the through hole and the corresponding opening run of the jaws. Therefore by adjusting the extension of the coupling shaft the travel extent transmitted by the actuator of the automatic machine to the whole kinematic series composed of the coupling shaft, the operating shaft and the transmitting means, is affected. The coupling shaft comprises at least one first portion, integrally coupled to the operating shaft, and at least one second portion, able to be removably coupled to the actuator of the automatic machine. The first portion and the second portion are screwed to each other in longitudinal direction, for example a portion inside the other portion, and the extension of the coupling shaft is directly proportional to the screwing degree of a portion with respect to the other portion of the coupling shaft itself.

The end of the first portion of the coupling shaft is accessible through the operating shaft for the engagement with the outer w'rench able to be inserted in the through hole, between the jaws. By rotating the wrench the first portion of the coupling shaft is screwed or unscrewed with respect to the second portion of the same shaft; this way the extension of such shaft and correspondingly the position of maximum opening of the jaw are adjusted.

More preferably the operating shaft is hollow and it is butt coupled with the first portion of the coupling shaft by means of a bushing screwed externally to both these elements.

For example, the accessible end of the first portion of the coupling shaft is provided with a hexagonal broaching and the wrench is a wrench with corresponding shape. The rotation of the wrench given by the technician in the spindle preparation step causes the shortening or the lengthening of the coupling shaft in longitudinal direction and the following reduction or increase adjustment of the maximum opening of the jaws.

The first portion of the coupling shaft only rotates in response to the bias given by the wrench. Instead the shift movement of the coupling shaft, which is the movement determining the opening and/or closing of the jaws, is given by the actuator of the automatic machine to which the spindle is assembled.

Preferably the spindle body is provided with a plurality of radial guides extending orthogonally with respect to the longitudinal axis of rotation. Each jaw is slidingly housed in a corresponding radial guide. This configuration is typical of the self-centering spindles.

Preferably the transmission elements are levers, pivoted to the body, provided with portions of engagement with the operating shaft and a corresponding jaw. For example, the operating shaft is provided with an outer circumferential groove engageable by a corresponding first portion of engagement of the transmission levers, and each of the jaws is provided with an accommodating seat of a corresponding second portion of engagement of the transmission levers. In this arrangement the pivot axis of each transmission lever and the longitudinal axis of rotation are skew.

In general the spindle according to the present invention allows to minimize the machine downtimes. Replacing the spindle assembled on the machine, each time the machining cycle and the average diameter of the shanks of the tools to be machined change, is not more needed; it is enough to adjust the maximum opening of the jaws with a wrench, for example an hex key, to render the opening itself suitable with the diameters of all the shanks of the tool series the machine will have to do in the new machining cycle (which can last, for example, all night).

Due to the spindle according to the invention the risks of misalignment of the shanks by the robotized harms providing to the relative insertion into the spindle are minimized, with evident advantages concerning the productivity.

### Brief Description of the Drawings

Further details of the invention will be evident anyway from the following description course made with reference to the attached drawings, in which:
- figure 1 is a perspective view of a first spindle according to the present invention, in a first configuration, and assembled on an automatic machine for machining tools;
- -figure 2 is a perspective view of the spindle shown in figure 1, in a second configuration, and assembled on an automatic machine for machining tools;
- figure 3 is a perspective view of the first spindle, in the first configuration, taken alone;
- figure 4 is an exploded view of the first spindle;
- figure 5 is a perspective view of the first spindle in the first configuration;
- figure 6 is longitudinal cross section of the first spindle in the first configuration;
- figure 7 is an elevation view of the first spindle in the second configuration;
- figure 8 is longitudinal cross section of the first spindle in the second configuration;
- figure 9 is an exploded view of a second spindle according to the present invention.

### Detailed description of the invention

Referring to figure 1, a portion of an automatic machine M for producing and/or sharpening tools provided with shank, for example cutting bits, is shown. With reference numeral 1 a spindle according to a first embodiment of the present invention is denoted, associated to the machine M.

The machine M is provided with means M1 having the function of rotationally biasing the spindle 1 on the relative longitudinal axis of rotation A-A.

The spindle 1 comprises a body 2, integrally attachable to the means M1 of the machine M, and six jaws 3 radially movable with respect to the longitudinal axis of rotation A-A, synchronously, to clamp the shank C of a tool in process. When the spindle 1 is assembled to the machine M the body 2 can be rotationally biased on the axis A-A, but every movement along such an axis is prevented.

The spindle 1 is shown in figure 1 in a first configuration; the jaws 3 are in a distal position with respect to the axis A-A. Such a position is defined as opened position of the jaws 3. As it will be described later, the maximum opening position can be adjusted.

Figure 2 shows the spindle 1 with the jaws 3 closed on the shank C of a tool, whose bit is not shown, coaxial with respect to the axis A-A. In this configuration the jaws 3 are proximal to the axis A-A; possibly the jaws 3 completely closed can move to the axis A-A when the shank C is not there.

The opening and closing of the jaws 3 are driven completely automatically by the machine M based on the machining cycles which are programmed in advance. The insertion and extraction of the shank C between/ from the opened jaws 3 is assigned to a robotized harm, not shown. The machining of the tool can provide milling, sharpening, cutting, rectifying, etc.; such operations are completed by appropriated tools of the machine M.

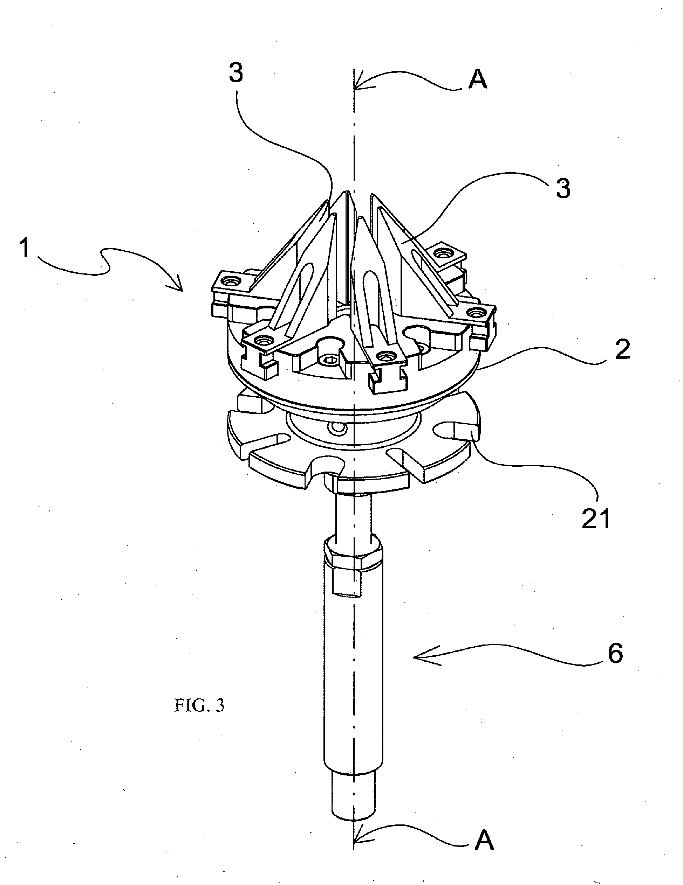

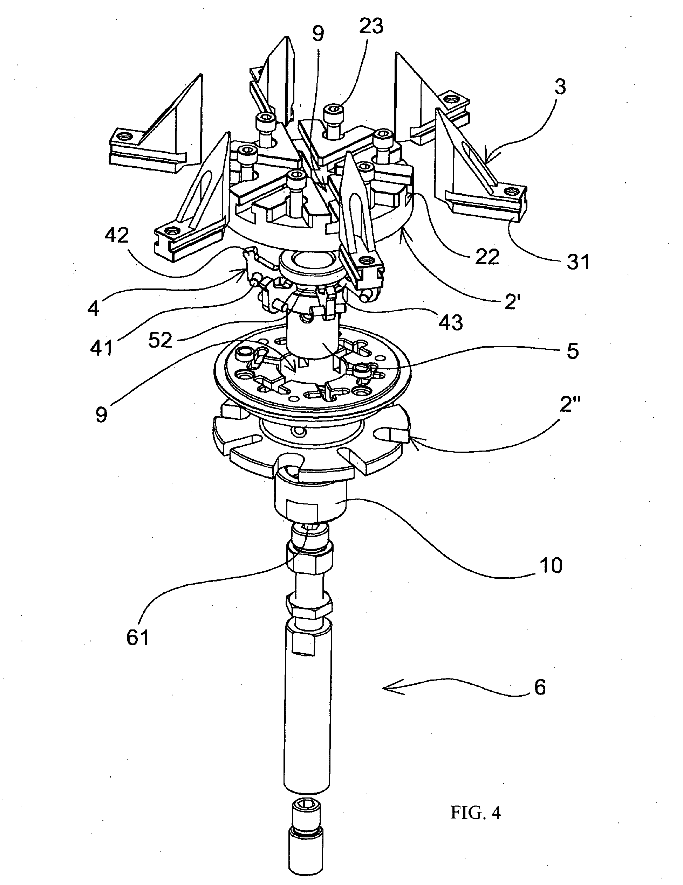

Referring to figures 3 and 4 the spindle 1 uncoupled from the machine M is shown. The body 2 of the spindle 1 is provided with a plurality of peripheral grooves 21 which facilitate the attachment thereof to the means M1 of the machine M. In this embodiment the body 2 comprises two coaxial portions 2' and 2" integrally coupled one to another with screws 23. The body 2 is provided with a longitudinal through hole 9, whose axis overlaps with the axis A-A.

The upper portion 2' of the body 2 is provided with a plurality of radial sliding guides 22 perpendicular to the longitudinal axis of rotation A-A of the body 2 itself. The jaws 3 are each provided with a lower portion 31 adapted to the sliding coupling in the corresponding radial guide 22. The through hole 9 provides a narrowing section 91. Inside the through hole 9 an operating shaft 5 is inserted coaxially whose upper portion, that is the portion facing the jaws 3, is provided with a circumferential groove 51. The operating shaft 5 can slide inside the through hole 9 along the axis A-A, as a piston in its relative cylinder. The upper portion of the operating haft 5 has an outer diameter larger than the inner diameter of the narrowing section 91, which thus appears as a stop means of the operating shaft 5 in its shifting movement in the direction opposite to the jaws 3.

The spindle 1 comprises a plurality of elements 4 for the transmission of the motion from the operating shaft 5 to corresponding jaws 3. In the embodiment shown in figures such transmission elements 4 are levers pivoted to the spindle body 2. In particular each lever has a pivot 41 whose axis of rotation is orthogonal and skew with respect to the longitudinal axis of rotation A-A. The levers 4, being substantially trilobate, have a portion 42 engaging with the lower portion 31 of the corresponding jaw 3 and a portion 43 engaging with the peripheral groove 52 of the operating shaft. The geometrical configuration of the levers 4 is such that the shifting movement of the operating shaft 5 in the through hole 9 is transformed in synchronous shifting movement of the jaws 3 in the corresponding radial guides 22.

Figures 5 and 6 show the spindle 1 in its first configuration, with the jaws 3 completely closed and in abutment against one another. The operating shaft 5 is in its lowered position, in abutment against the narrowing section 91.

The stop means of the operating shaft 5 in the direction of approaching to the jaws 3 is constituted of a threaded bushing 10 screwed to the outer surface of the shaft 5 itself.

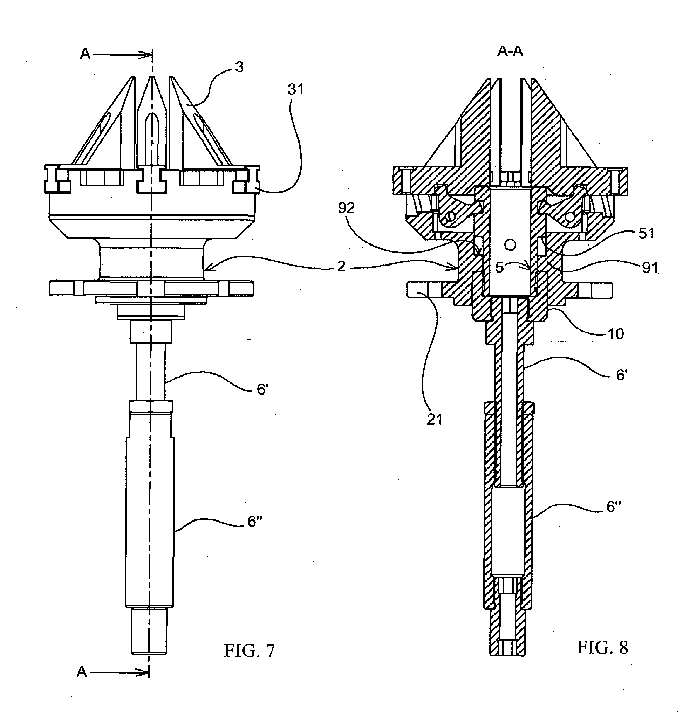

Figures 7 and 8 show the spindle 1 in the second configuration, corresponding to the position of maximum opening of the jaws 3, maximally distal from the axis A-A. In this position the upper portion of the operating shaft 5 is apart from the narrowing section 91, against which the bushing 10 moved in abutment.

Referring to figures 5-8, the bushing 10 connects the operating shaft 5 to a shaft 6 of the spindle 1 which can be coupled to a linear actuator (not shown) of the machine M. The coupling shaft 6 is intended for being shifted along the axis A-A, alternately in the two directions, to drive the opening and closing of the jaws 3 when the spindle body 2 is not rotated by the means M1 of the machine M. In other words the coupling shaft 6 is shiftingly biased along the axis A-A by an actuator of the machine M to open the jaws 3 and allow the insertion and withdrawal of the shank C between/ from the jaws 3.

In the embodiment shown in figures the shaft 6 is composed by two portions, 6' and 6" respectively. The upper portion 6' of the coupling shaft 6'can be accessed via the through hole 9 and the operating shaft 5, which is hollow. On the portion 6' a hexagonal broaching 61 is obtained for the plug-in of an outer wrench a technician uses to adjust as required, inside the maximum range defined by the stop means, the maximum opening position of the jaws 3. The portion 6" of the coupling shaft 6 is constrained to the actuator of the machine M without any rotation possibility. In figures the portion 6' is shown in abutment against the lower portion of the shaft 5.

By engaging a wrench in the broaching 61 and giving a left-handed o right-handed rotation the portion 6' is screwed or unscrewed with respect to the portion 6" of the shaft 6, determining a corresponding reduction or a corresponding increase of the extension of the shaft 6 itself and a corresponding reduction and increase of the allowed maximum opening of the jaws 3. For example the reduction of the longitudinal extent of the shaft 6 obtained by screwing the two portions 6' and 6" thereof is proportional to the reduction of the encountered opening travel of the jaws 3; the opening of the jaws 3 is reduced with respect to the position shown in figure 8, corresponding to the allowed maximum opening due to the stop means.

The adjustment of the maximum opening of the jaws can be actuated with the spindle 1 stopped, even if it is assembled on the machine M.

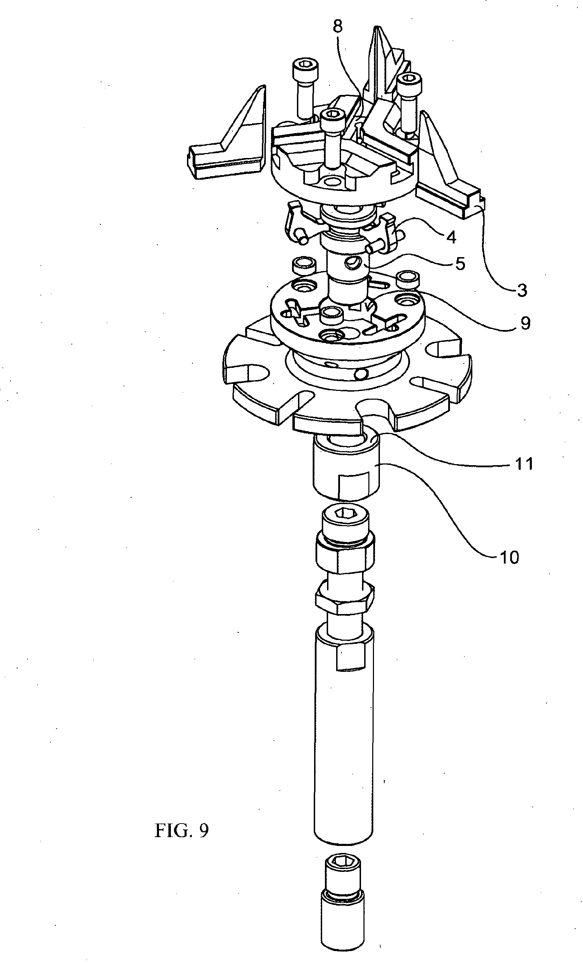

Figure 9 is an exploded view of a second embodiment of a spindle 1' according to the present invention, substantially equivalent to the spindle 1, but provided with three jaws 3.

In an alternative embodiment of the present invention, not shown in figures, the bushing 10 can be unscrewed at least partially from the operating shaft 5 or from the coupling shaft 6. By engaging a wrench in the broaching 61 and giving a left- handed o right- handed rotation the bushing 10 is screwed or unscrewed with respect to the shaft 5, determining a corresponding increase or a corresponding decrease of the allowed maximum opening to the jaws 3. By partially unscrewing the bushing 10 from the operating shaft 5 a gap (not shown) is made between the two shafts 5 and 6'. Such a gap is proportional to the reduction of the maximum opening of the jaws 3 that can be obtained with respect to the position shown in figure 8, corresponding to the allowed maximum opening.

## Claims

1. Tool spindle (1) for automatic machines including:
- a body (2) provided with a longitudinal axis of rotation (A-A) ;
- a plurality of jaws (3), constrained to said body (2), movable between a position of maximum closure, proximal to the longitudinal axis of rotation (A-A), and a position of maximum opening, distal from the longitudinal axis of rotation (A-A);
- means (4, 5, 6) for driving the displacement of said jaws (3) between the position of maximum closure and position of maximum opening, and/ or vice versa, and
- means (61, 6', 6") for adjusting the travel extent of said driving means (4-6),
wherein said adjusting means can be activated to modify the position of maximum opening of the jaws (3), synchronously and symmetrically for all the jaws, independently from the position of maximum closure of the jaws (3),
wherein said body (2) is provided with a through hole (9) coaxial with said longitudinal axis of rotation (A-A), and said driving means (4-6) include:
- a shaft (6) coupling with an actuator of an outer automatic machine;
- an operating shaft (5), alternately shiftable into said through hole (9) in response to a bias given by the coupling shaft (6), and
- a plurality of elements (4) for transmitting the movement of the operating shaft (5) to said jaws (3), and
wherein said adjusting means (61, 6', 6") are arranged on, or associated with, the coupling shaft (6), and wherein the operating shaft (5) and the coupling shaft (6) are shiftingly and integrally coupled and said adjusting means (61, 6', 6") can be activated to adjust the travel extent transmitted by the coupling shaft (6) to the operating shaft (5) in the longitudinal direction (A-A), **characterized in that**
said coupling shaft (6) includes at least a first portion (6'), integrally coupled to said operating shaft (5), and at least a second portion (6"), able to be removably coupled to a corresponding actuator of an outer automatic machine, wherein the first portion (6') and the second portion (6") are screwed to each other in the longitudinal direction (A-A) and the extension of the coupling shaft (6) is directly proportional to the screwing degree of the first portion (6') with respect to the second portion (6"), and
**in that** the end (61) of the first portion (6') of the coupling shaft (6) is accessible through the operating shaft (5) for the engagement with an outer adjusting key adapted to be inserted into said through hole (9), between the jaws (3), to screw or unscrew the first portion (6') of the coupling shaft (6) relatively to the second portion (6") of the coupling shaft (6) and adjust the extension of the coupling shaft (6) and correspondingly the position of maximum opening of the jaws (3).

2. Spindle (1) according to claim 1, wherein at least a portion (61) of said adjusting means (61, 6', 6") can be accessed from outside of said body (2) and the travel extent of said driving means (4-6) is adjustable by a wrench engageable in the accessible portion (61) of said adjusting means (61, 6', 6") even when the spindle (1) is assembled on an automatic machine.

3. Spindle (1) according to claim 1, wherein the extension of said coupling shaft (6) is adjustable between a minimum and a maximum, respectively, to minimize and maximize the travel extent of the operating shaft (5) in said through hole (9) and the corresponding opening travel of the jaws (3).

4. Spindle (1) according to claim 1, wherein the operating shaft (5) is hollow and it is butt coupled with the first portion (6') of the coupling shaft (6) by means of a bushing (10) screwed externally to both the operating shaft (5) and the first portion (6') of the coupling shaft.

5. Spindle (1) according to any one of the claims 2-4, wherein the maximum travel extent of the operating shaft (5) in said through hole (9) is limited by stop means (51, 92; 11, 93).

6. Spindle (1) according to any one of the claims 1-5, wherein said body is provided with a plurality of radial guides (8) extending perpendicularly to the longitudinal axis of rotation (A-A), and each of said jaws (3) is slidingly housed in a corresponding guide between said radial guides (8).

7. Spindle (1) according to any one of the claims 1-6, wherein said transmission elements (4) are levers, pivoted to said body (2), provided with portions of engagement with the operating shaft (5) and a corresponding jaw between said jaws (3).

8. Spindle (1) according to claim 7, wherein the operating shaft (5) is provided with an outer circumferential groove (52) engageable by a corresponding first portion (43) of engagement of the transmission levers (4), and each of said jaws (3) is provided with an accommodating seat of a corresponding second portion (42) of engagement of the transmission levers (4), and wherein the pivot axis of each transmission lever (4) and the longitudinal axis of rotation (A-A) are skew.

## Patentansprüche

1. Werkzeugspindel (1) für automatische Maschinen umfassend:
- einen Körper (2) mit einer Drehlängsachse (A-A);
- eine Vielzahl von Backen (3), die an dem Körper (2) angebracht sind und zwischen einer maximalen, proximal zur Drehlängsachse (A-A) angeordneten Schließposition und einer maximalen, distal zur Drehlängsachse (A-A) angeordneten Öffnungsposition beweglich sind;
- Mittel (4, 5, 6) zum Antrieb der Bewegung der Backen (3) zwischen der maximalen Öffnungsposition und der maximalen Schließposition und umgekehrt, und
- Mittel (61, 6', 6") zur Einstellung der Wegstrecke der Antriebsmittel (4-6), wobei die Einstellmittel aktiviert werden können, um die maximale Öffnungsposition der Backen (3) synchron und symmetrisch für alle Backen und unabhängig von der maximalen Öffnungsposition der Backen (3) zu verändern,
wobei der Körper (2) eine mit der Drehlängsachse (A-A) koaxiale Durchgangsbohrung (9) aufweist und die Antriebsmittel (4-6) umfassen:
- eine Welle (6), welche mit einem Aktuator einer externen automatischen Maschine verbunden ist;
- eine Antriebswelle (5), die in dieser Durchgangsbohrung (9) infolge eine Beaufschlagung mit der Verbindungswelle (6) abwechselnd beweglich ist, und
- eine Vielzahl von Elementen (4) zum Übertragen der Bewegung der Antriebswelle (5) auf den Backen (3), und
wobei die Einstellmittel (61, 6', 6") auf der Verbindungswelle (6) angeordnet oder dieser zugeordnet sind, wobei die Antriebswelle (5) und die Verbindungswelle (6) verschiebbar und zusammenhängend gekoppelt sind und die Einstellmittel (61, 6', 6") zur Einstellung der Wegstrecke aktiviert werden können, welche Wegstrecke von der Verbindungswelle (6) auf der Antriebswelle (5) in der Längsrichtung (A-A) übertragen wird,
**dadurch gekennzeichnet,**
**dass** die Verbindungswelle (6) zumindest einen ersten, mit der Betriebswelle (5) einstückig verbundenen Abschnitt (6') und zumindest einen zweiten Abschnitt (6") aufweist, der mit einem entsprechenden Aktuator einer externen automatischen Maschine lösbar verbunden werden kann, wobei der erste Abschnitt (6') und der zweite Abschnitt (6") in der Längsrichtung (A-A) miteinander verschraubt sind und die Erstreckung der Verbindungswelle (6) unmittelbar proportional zum Grad der Verschraubung des ersten Abschnittes (6') gegenüber dem zweiten Abschnitt (6") ist, und
**dass** das Ende (61) des ersten Abschnittes (6') der Verbindungswelle (6) durch die Antriebswelle (5) hindurch zum Eingreifen mit einem externen Stellschlüssel zugänglich ist, der dafür geeignet ist, innerhalb der Durchgangsbohrung (9) zwischen den Backen (3) eingesteckt zu werden, um den ersten Abschnitt (6') der Verbindungswelle (6) an dem zweiten Abschnitt (6") der Verbindungswelle (6) anzuschrauben oder von diesem abzuschrauben und um die Erstreckung der Verbindungswelle (6') und entsprechend die maximale Öffnungsposition der Backen (3) einzustellen.

2. Spindel (1) nach Anspruch 1, wobei zumindest ein Abschnitt (61) der Einstellmittel (61, 6', 6") von außerhalb des Körpers (2) zugänglich ist und die Wegstrecke der Antriebsmittel (4-6) durch einen Schraubenschlüssel einstellbar ist, der in den zugänglichen Abschnitt (61) der Einstellmittel (61, 6', 6") eingreifen kann, auch bei auf einer automatischen Maschine zusammengebauten Spindel (1).

3. Spindel (1) nach Anspruch 1, wobei die Erstreckung der Verbindungswelle (6) zwischen einem Minimum und einem Maximum einstellbar ist, um die Wegstrecke der Antriebswelle (5) in der Durchgangsbohrung (9) und den entsprechenden Öffnungsweg der Backen (3) zu minimieren und maximieren.

4. Spindel (1) nach Anspruch 1, wobei die Antriebswelle (5) hohl ist und mit dem ersten Abschnitt (6') der Verbindungswelle (6) mittels einer Buchse (10) auf Stoß verbunden ist, die außenseitig mit der Antriebswelle (5) und mit dem ersten Abschnitt (6') der Verbindungswelle verschraubt ist.

5. Spindel (1) nach einem der Ansprüche 2-4, wobei die maximale Wegstrecke der Antriebswelle (5) in der Durchgangsbohrung (9) durch Stopp-mittel (51; 92; 11, 93) begrenzt wird.

6. Spindel (1) nach einem der Ansprüche 1-5, wobei der Körper eine Vielzahl von Radialführungen (8) aufweist, die sich senkrecht zur Drehlängsachse (A-A) erstrecken, und jede der besagten Backen (3) in einer entsprechenden Führung zwischen den Radialführungen (8) gleitend aufgenommen ist.

7. Spindel (1) nach einem der Ansprüche 1-6, wobei die Übertragungselemente (4) als an den Körper (2) schwenkbar angelenkte Hebel ausgebildet sind, welche Abschnitte zum Eingriff mit der Antriebswelle (5) und eine entsprechende zwischen den besagten Backen (3) angeordnete Backe aufweisen.

8. Spindel (1) nach Anspruch 7, wobei die Antriebswelle (5) eine Außenumfangsnut (52) aufweist, in die einen entsprechenden ersten Eingriffsabschnitt (43) der Übertragungshebel (4) eingreifbar ist, und jede Backe (3) einen Aufnahmesitzt eines entsprechenden zweiten Eingriffsabschnittes (42) der Übertragungshebel (4) aufweist, und wobei die Schwenkachse jedes Übertragungshebels (4) und die Drehlängsachse (A-A) zueinander schief angeordnet sind.

## Revendications

1. Mandrin (1) porte-outils destiné à des machines automatiques comprenant:
- un corps (2) ayant un axe longitudinal de rotation (AA);
- une pluralité de mâchoires (3), contraintes sur ledit corps (2), mobile entre une position de fermeture maximale, proximale par rapport à l'axe longitudinal de rotation (A-A), et une position d'ouverture maximale, distale par rapport à l'axe longitudinal de rotation (A-A);
- des moyens (4, 5, 6) pour entraîner le déplacement desdites mâchoires (3) entre la position de fermeture maximale et la position d'ouverture maximale, et/ou vice versa, et
- des moyens (61, 6', 6") pour régler l'étendue de la course desdits moyens d'entraînement (4-6),
dans lequel lesdits moyens de réglage peuvent être actionnés pour modifier la position d'ouverture maximale des mâchoires (3) de manière synchrone et symétrique pour toutes les mâchoires, indépendamment de la position de fermeture maximale des mâchoires (3),
dans lequel ledit corps (2) est muni d'un trou traversant (9) coaxial avec ledit axe longitudinal de rotation (A-A), et lesdits moyens d'entraînement (4-6) comprennent:
- un arbre d'accouplement (6) avec un actionneur d'une machine automatique externe;
- un arbre de manoeuvre (5), déplaçable alternativement dans ledit trou traversant (9) en réponse à une sollicitation donnée par l'arbre de couplage (6), et
- une pluralité d'éléments (4) pour transmettre le mouvement de l'arbre de manoeuvre (5) auxdites mâchoires (3), et
dans lequel lesdits moyens de réglage (61, 6', 6") sont disposés sur, ou associés avec,
l'arbre d'accouplement (6), et dans lequel l'arbre de manoeuvre (5) et l'arbre d'accouplement (6) sont couplés de manière déplaçable et solidaire et lesdits moyens de réglage (61, 6', 6") peuvent être activés pour régler l'étendue de la course transmise par l'arbre d'accouplement (6) à l'arbre de manoeuvre (5) dans la direction longitudinale (A-A), **caractérisé en ce que**
ledit arbre d'accouplement (6) comprend au moins une première partie (6') couplée de manière solidaire audit arbre de manoeuvre (5), et au moins une seconde partie (6"), qui peut être couplée de manière amovible à un actionneur correspondant d'une machine automatique externe, dans lequel la première partie (6') et la seconde partie (6") sont vissées les unes aux autres dans la direction longitudinale (A-A) et la longueur de l'arbre d'accouplement (6) est directement proportionnelle au degré du vissage de la première partie (6') par rapport à la seconde partie (6"), et
**en ce que** l'extrémité (61) de la première partie (6') de l'arbre d'accouplement (6) est réglage externe adaptée pour être insérée dans ledit trou traversant (9), entre les mâchoires (3), pour visser ou dévisser la première partie (6') de l'arbre d'accouplement (6) relativement à la seconde partie (6") de l'arbre d'accouplement (6) et régler la longueur de l'arbre d'accouplement (6) et. de manière correspondante, la position d'ouverture maximale des mâchoires (3).

2. Mandrin (1) selon la revendication 1, dans lequel au moins une partie (61) desdits moyens de réglage (61, 6', 6") est accessible depuis l'extérieur dudit corps (2) et pouvant s'engager dans la partie accessible (61) desdits moyens de réglage (61, 6', 6"), même lorsque le mandrin (1) est monté sur une machine automatique.

3. Mandrin (1) selon la revendication 1, dans lequel la longueur dudit arbre d'accouplement (6) est réglable respectivement entre un minimum et un maximum, afin de minimiser et maximiser l'étendue de la course de l'arbre de manoeuvre (5) dans ledit trou traversant (9) et la correspondante course d'ouverture des mâchoires (3).

4. Mandrin (1) selon la revendication 1, dans lequel l'arbre de manoeuvre (5) est creux et il est couplé tête à tête avec la première partie (6') de l'arbre d'accouplement (6) au moyen d'une bague (10) vissée à l'extérieur de l'arbre de manoeuvre (5) et de la première partie (6') de l'arbre d'accouplement.

5. Mandrin (1) selon l'une quelconque des revendications 2-4, dans lequel l'étendue maximale de la course de l'arbre de manoeuvre (5) dans ledit trou traversant (9) est limitée par des moyens (51, 92; 11, 93) de fin de course.

6. Mandrin (1) selon l'une quelconque des revendications 1-5, dans lequel ledit corps est muni d'une pluralité de guides radiaux (8) s'étendant perpendiculaire à l'axe longitudinal de rotation (AA), et chacune desdites mâchoires (3) est logée de manière coulissante dans un guide correspondant entre lesdits guides radiaux (8).

7. Mandrin (1) selon l'une quelconque des revendications 1-6, dans lequel lesdits éléments de transmission (4) sont des leviers montés pivotant sur ledit corps (2), munis de parties d'engagement avec l'arbre de manoeuvre (5) et d'une mâchoire correspondante entre lesdites mâchoires (3).

8. Mandrin (1) selon la revendication 7, dans lequel l'arbre de manoeuvre (5) est muni d'une rainure circonférentielle extérieure (52) qui peut être engagée par une première partie correspondante (43) d'engagement des leviers de transmission (4), et chacune desdites mâchoires (3) est munie d'un siège de réception d'une seconde partie correspondante (42) d'engagement du levier de transmission (4), et dans lequel l'axe du pivot de chaque levier de transmission (4) et l'axe longitudinal de rotation (A-A) sont obliques.
